Europäisches Patentamt

European Patent Office

Office européen des brevets

(19)

(11) Veröffentlichungsnummer: **0 627 462 A2**

## (12) EUROPÄISCHE PATENTANMELDUNG

(21) Anmeldenummer: 94113757.2

(22) Anmeldetag: **20.05.89**

(51) Int. Cl.5: **C08K 5/54**, C08L 21/00

Diese Anmeldung ist am 02 - 09 - 1994 als Teilanmeldung zu der unter INID-Kode 60 erwähnten Anmeldung eingereicht worden.

(30) Priorität: **11.07.88 DE 3823450**

(43) Veröffentlichungstag der Anmeldung: **07.12.94 Patentblatt 94/49**

(60) Veröffentlichungsnummer der früheren Anmeldung nach Art. 76 EPÜ: **0 350 600**

(84) Benannte Vertragsstaaten: **BE DE FR GB IT NL**

(71) Anmelder: **Degussa Aktiengesellschaft
Weissfrauenstrasse 9
D-60311 Frankfurt (DE)**

(72) Erfinder: **Deschler, Ulrich, Dr.
Birkenweg 1
D-63457 Hanau (DE)**
Erfinder: **Kleinschmit, Peter, Dr.
Wildaustrasse 19
D-63457 Hanau (DE)**
Erfinder: **Wolff, Siegfried, Dr.
Weiherstrasse 28
D-53332 Bornheim-Merten (DE)**
Erfinder: **Tan, Ewe-Hong
Rembrandtstrasse 22
D-50389 Wesseling (DE)**

(54) **Verwendung von reinen 3-Butenyltriorganyloxysilanen in vulkanisierbaren Kautschukmischungen und diese Mischungen.**

(57) Die Erfindung betrifft die Verwendung von reinen 3-Butenyltriorganyloxysilanen in mit silikatischen Füllstoffen verstärkten und mit Peroxiden vulkanisierbaren Kautschukmischungen.

**EP 0 627 462 A2**

Die Erfindung betrifft die Verwendung von reinen 3-Butenyltriorganyloxysilanen in mit silikatischem Füllstoff verstärkten und mit Peroxiden vulkanisierbaren Kautschukmischungen und diese Mischungen.

Die Herstellung eines solchen Butenyltriorganyloxysilans wird von Capka et al. in Collect. Czech. Chem. Commun. 1976, 41 (4) 1024-9 (C.A. 85:78183m (1976)) beschrieben, allerdings mit dem Hinweis, daß die Anlagerung von $(C_2H_5O)_3SiH$ an 1,3 Butadien nicht selektiv verläuft. Dieselbe Problematik wird auch in C.A. 87:152308r (1977) abgehandelt. Nach diesem Zitat erhält man $(C_2H_5O)_3Si-CH_2-CH_2-CH = CH_2$ durch Hydrosilylierung von 1,3-Butadien mit $(C_2H_5O)_3SiH$ in allerdings nur sehr geringer Ausbeute neben zwei als Hauptprodukte erhaltenen, bezüglich der C-C-Doppelbindung stellungsisomeren Butenylsilanen. Dies wird durch das tschechoslowakische Patent 171 597 vom 15. 2. 1978 (C.A. 89:215545e (1978)) bestätigt, dem man auch die Eignung der Titelverbindung zur Verbesserung der Haftung zwischen organischen Polymeren und anorganischen Füllstoffen entnehmen kann.

Die Verwendung der Titelverbindungen in Emulsionen zur Vorbehandlung von Glasfasern wird in der tschechoslowakischen Patentschrift 221 181 B (C.A. 105:25289a (1986)) vom 15. 03. 1986 beschreiben. Ein Verfahren zur Herstellung kann man dieser Druckschrift nicht entnehmen.

E. Lukevics et al., J. Organomet. Chem. Libr., 5 (1977) 26, beschreiben die Trichlorsilananlagerung an 1,3-Butadien, bei der die aus der 1,2-Addition erwartete Verbindung $Cl_3Si-CH_2-CH_2-CH = CH_2$ nur in gerigem Maße gebildet wird, weil auch die 1,4-Addition mit Verschiebung der Doppelbindung, die doppelte Silylierung und die Telomerisation in Kauf genommen werden müssen. Bei einer nachfolgenden Veresterung der Trichlorsilylfunktion mit Alkoholen zum gewünschten Produkt gemäß Formel (I) ergibt sich dann zudem die Gefahr, daß der dabei freigesetzte Chlorwasserstoff an die verbliebene Doppelbindung addiert wird.

Ein Verfahren zur selektiven Herstellung von reinen, hydrolysierbaren Butenylsilanen mit endständiger C-C-Doppelbindung wird in der Stemmanmeldung 89 109 122.5 beschrieben. Gegenstand der Erfindung ist die Verwendung von reinen, d. h. isomerenfreien 3-Butenyltriorganyloxysilanen der allgemeinen Formel

$$(RO)_3-Si-CH_2-CH_2-CH = CH_2 \qquad (I),$$

in der bedeutet

R: $C_1$ - $C_8$ - Alkyl, Aryl, Aralkyl, insbesondere

$R = CH_3, C_2H_5, C_6H_5, C_6H_5-CH_2^-$,

in vulkanisierbaren Kautschukmischungen, die einen silikatischen Füllstoff gegebenenfalls in Mischungen mit Ruß enthalten.

Es ist bekannt, daß in mit peroxidischen Verbindungen vulkanisierbaren Kautschukmischungen, die einen höheren Anteil an silikatischen Füllstoffen wie beispielsweise gefällte Kieselsäuren enthalten sollen, ein Organosilan eingesetzt werden muß, um den Vulkanisaten ausreichend gute Eigenschaften zu verleihen.

Derartige Mischungen nach dem Stand der Technik enthalten als Organosilan häufig das Vinyltris(2-methoxyethoxy) silan. Die daraus bei der Mischungsherstellung/Vulkanisation entstehenden Spaltprodukte wurden jedoch als toxikologisch bedenklich eingestuft.

Erfindungsgemäß enthalten diese Kautschukmischungen jetzt stattdessen mindestens eine Verbindung der allgemeinen Formel (I )

$$(RO)_3Si-CH_2-CH_2-CH = CH_2$$

in einer Menge von 0,2 - 15 phr, bevorzugt 0,2 - 6 phr. Die sonstigen Bestandteile von vulkanisierbaren Kautschukmischungen sind dem Fachmann an sich bekannt.

Zu den verwendbaren Kautschuken zählen einzeln oder im Gemisch miteinander beispielsweise natürliche und synthetische Kautschuke, die ölgestreckt sein können, wie Butadienkautschuke, Isoprenkautschuke, Butadien-Styrol-Kautschuke, Butadien-Acrylnitril-Kautschuke, Terpolymere aus Äthylen, Propylen und nichtkonjugierten Dienen, hydrierte Acrylnitril-Kautschuke und chlorsulfoniertes Polyäthylen. Kautschukverschnitte der genannten Kautschuktypen mit anderen Polymeren in untergeordneten Mengen sind nach der Erfindung ebenfalls verwendbar.

Die nach der Erfindung verwendbaren silikatischen Füllstoffe, auch als Mischung von zwei oder mehr Füllstoffen, sind an sich in der Kautschuktechnologie bekannte Füllstoffe. Dabei ist der Begriff "silikatischer Füllstoff" ein weitergefaßter und bezieht sich auf mit Kautschuken verträgliche bzw. in Kautschuken verträgliche bzw. in Kautschukmischungen einarbeitbare Füllstoffe, die aus Silikaten bestehen, Silikate enthalten und bzw. oder Silikate im weitesten Sinne chemisch gebunden enthalten. Insbesondere zählen zu den silikatischen Füllstoffen:

- Hochdisperse Kieselsäure-Füllstoffe (Siliciumdioxid) mit spezifischen Oberflächen (BET-Oberfläche gemessen mit $N_2$) im Bereich von etwa 5 bis 300, vorzugsweise 5 bis 250 $m^2/g$ und mit Primärteilchengrößen im Bereich von etwa 10 bis 400 nm, die hergestellt werden können z. B. durch Ausfällung aus Lösungen von Silikaten mit anorganischen Säuren, durch hydrothermalen Aufschluß, durch hydrolytische und/oder oxidative Hochtemperaturumsetzung von flüchtigen Siliciumhalogeniden oder durch einLichtbogenverfahren. Diese Kieselsäuren können gegegebenfalls auch als Mischoxide oder Oxidgemische mit den Oxiden der Metalle Aluminium, Magnesium, Calcium, Barium, Zink, Zirkon und/oder Titan vorliegen.
- Synthetische Silikate, z. B. Aluminiumsilikat oder Erdalkalisilikate wie Magnesium- oder Calciumsilikat, mit spezifischen Oberflächen von etwa 20 bis 300 $m^2/g$ und Primärteilchengrößen von etwa 10 bis 400nm.
- Natürliche Silikate, z. B. Kaoline, Tone, Clays sowie natürliche Kieselsäuren, wie beispielsweise Quarz und Kieselgur.
- Glasfasern und Glasfasererzeugnisse wie Matten, Stränge, Gewebe, Gelege und dergleichen sowie Mikroglaskugeln.

Als Füllstoffmischungen können genannt werden Kieselsäure/Kaolin oder Kieselsäure/Glasfasern/Asbest sowie Verschnitte der silikathaltigen Verstärkerfüllstoffe mit den bekannten Gummirußen, z. B. Kieselsäure/ISAF-Ruß oder Kieselsäure/Glasfasercord/HAF-Ruß.

Ruß kann zusätzlich in den erfindungsgemäßen Kautschuk-Mischungen zugegen sein,nicht nur zur Grau- oder Schwarzfärbung der Vulkanisate, sondern zur Erzielung von besonderen, wertvollen Vulkanisateigenschaften, wobei die bekannten Gummiruße vorgezogen werden. Der Ruß wird in Mengen von bis zu 150 Gewichtsteilen, vorzugsweise von 0,1 bis 80 Gewichtsteilen, bezogen auf 100 Gewichtsteile Kautschuk, in den neuen Kautschuk-Mischungen eingesetzt.

Für den Fall des Vorhandenseins von silikatischem Füllstoff und Ruß in den Kautschuk-Mischungen wird der Gesamtfüllstoffgehalt, bezogen auf 100 Gewichtsteile Kautschuk, auf maximal 400 Gewichtsteile begrenzt. Im Falle aktiverer Kieselsäurefüllstoffe kann man 150 Gewichtsteile als obere Grenze ansehen.

Ferner kann es von besonderem Vorteil sein, wenn die Kautschukmischungen Weichmacher oder Weichmacheröle enthalten, beispielsweise paraffinische Weichmacheröle. Der Mengenanteil an Weichmacheröl kann in weiten Grenzen schwanken, so kann er mehr als 0,5 oder 5 Gewichtsteile betragen, insbesondere mehr als 10 bis etwa 100 Gewichtsteile.

Weiterhin können den erfindungsgemäßen Kautschuk-Mischungen Oxide von mehrwertigen Metallen, wie sie ebenfalls in der Kautschuktechnologie Verwendung finden, in Mengen von 1 - 10 Gewichtsteilen, bezogen auf 100 Gewichtsteile des Kautschuks hinzugefügt werden. Zu den Metalloxiden zählt in erster Linie das Zinkoxid, insbesondere in feinteiliger Form.

Als Vernetzungsmittel sind die in der Kautschuk-verarbeitenden Industrie eingesetzten Peroxide geeignet. Zu den verwendbaren Peroxiden zählen beispielsweise Benzoylperoxid, 1,3-Bis(tert.butyl-peroxyisopropyl) benzol, p-Chlorobenzoylperoxid, tert.Butylcumylperoxid, Di-ter.butylperoxid, Dicumylperoxid und 2,5-Dimethyl-3,5-(di-tert.butylperoxy)hexan.

Die neuen Kautschukmischungen werden auf folgende Weise hergestellt. Vorgezogen wird ein zweistufiger Mischzyklus. In der ersten Mischstufe werden in einer Knetervorrichtung bei Durchflußtemperaturen zwischen 55 und 60 °C folgende Bestandteile gemischt:

Innerhalb derersten Minute Kautschuk, silikatischer Füllstoff, das erfindungsgemäße Silan, Weichmacheröl, Zinkoxid und alle anderen Chemikalien außer Peroxiden; nach insgesamt 4 Minuten wird die Mischung aus dem Kneter ausgefahren.

In der zweiten Mischstufe wird zu der Vormischung aus der ersten Mischstufe nun auf der Walze bei einer Durchflußtemperatur von etwa 15 °C das Peroxid zugesetzt.

Dieses zweistufige Mischverfahren vermeidet das vorzeitige Anvulkanisieren der Mischung. Industrielle Einsatzgebiete für die beschriebenen Kautschukmischungen und deren Vulkanisate sind beispielsweise:

Technische Gummiartikel wie Kabelmäntel, Schläuche, Heizschläuche, Walzenbeläge, elektrische Isolierungen, Dichtungen, Spritzprofile und Auskleidungen.

Die Herstellung der Verbindungen gemäß Formel (I) wird in der europaischen Patentanmeldung Nr. 89 109 122 (EP-A-350 600) beschrieben.

Beispiel 1

Nachstehend ein Beispiel einer Rezeptur für die neuen Kautschukmischungen mit Prüfergebnissen

Die physikalischen Prüfungen werden bei RT (Raumtemperatur) nach folgenden Normvorschriften ausgeführt:

| Zugfestigkeit | |
|---|---|
| Spannungswert 100 % | |
| Spannungswert 200 % | |
| Spannungswert 300 % | DIN 53 404 gemessen in MPa |
| Bruchdehnung | DIN 53 404 gemessen in % |
| DIN Abrieb | DIN 53 516 gemessen in (mm$^3$) |
| Compression Set | ASTM D 395, Methode B gemessen in %. |

In dem Anwendungsbeispiel werden folgende Namen und Abkürzungen benutzt, deren Bedeutungen in folgendem angegeben werden.

Keltan[R] 712:        Terpolymer aus Äthylen, Propylen und Dienen (DSM, Holland)
Ultrasil[R] VN 3 Gran.:   feinteilige gefällte Kieselsäuren, BET-Oberfläche 175 m$^2$/g (Degussa)
Circosol[R] 4240:      Weichmacheröl (Sun Refining and Marketing Co.)
Perkadox[R] 14/40:     1,3-Bis-(tert.butyl-peroxy-isopropyl) benzol (AKZO)

| | 1 | 2 | 3 |
|---|---|---|---|
| Keltan 712 | 100 | 100 | 100 |
| Ultrasil VN 3 Gran. | 40 | 40 | 40 |
| Circosol 4240 | 10 | 10 | 10 |
| Zinkoxid RS | 5 | 5 | 5 |
| 3-Butenyltrimethoxisilan | - | 0,6 | 1,2 |
| Perkadox 14/40 | 6,5 | 6,5 | 6,5 |
| Vulkanisation: 50 min bei 160 °C | | | |
| Zugfestigkeit (MPa) | 13,0 | 11,0 | 9,8 |
| Spannungswert 100 % (MPa) | 1,7 | 2,2 | 2,4 |
| Spannungswert 200 % (MPa) | 3,0 | 4,8 | 5,7 |
| Spannungswert 300 % (MPa) | 4,8 | 9,3 | - |
| Bruchdehnung (%) | 510 | 330 | 270 |
| DIN-Abrieb (mm$^3$) | 166 | 122 | 113 |
| Compression Set B (%) | 14,9 | 11,6 | 9,8 |
| 22 h/70 °C | | | |

Dieses Beispiel zeigt, daß durch die Anwendung des erfindungsgemäß eingesetzten 3-Butenyltrimethoxisilans die Spannungswerte stark verbessert werden. Ferner sind Abrieb und Compression Set - vorteilhaft für technische Artikel - stark reduziert.

**Patentansprüche**

**1.** Verwendung von reinen 3-Butenyltriorganyloxysilanen der allgemeinen Formel

(Ro)$_3$Si-CH$_2$-CH$_2$-CH = CH$_2$      (I)

in der bedeutet
   R:      C$_1$ - C$_8$ - Alkyl, Aryl, Aralkyl,insbesondere CH$_3$, C$_2$H$_5$, C$_6$H$_5$, C$_6$H$_5$- CH$_2$
in mit silikatischen Füllstoffen verstärkten und mit Peroxiden vulkanisierbaren Kautschuken oder Kautschukmischungen.

4

2. Mit Peroxiden vulkansierbare Kautschukmischungen, enthaltend mindestens einen Kautschuk und silikatische Füllstoffe,
dadurch gekennzeichnet, daß sie mindestens ein 3-Butenyltriorganyloxysilan gemäß der allgemeinen Formel (I), in einer Menge von 0,2 bis 15 Gew.-Teile enthalten, bezogen auf 100 Teile Kautschuk.

3. Kautschukmischungen gemäß Anspruch 2,
dadurch gekennzeichnet, daß sie eine gefällte Kieselsäure mit einer spez. Oberfläche von 5 bis 300 m m$^2$/g enthalten.

4. Kautschukmischungen gemäß den Ansprüchen 2 oder 3,
dadurch gekennzeichnet, daß sie zusätzlich Ruß enthalten.

5. Kautschukmischungen gemäß den Ansprüchen 2 bis 4,
dadurch gekennzeichnet, daß man als Kautschukkomponente EPDM einsetzt.